Europäisches Patentamt

(19) European Patent Office

Office européen des brevets

(11) Publication number: **0 047 625**
A2

(12) **EUROPEAN PATENT APPLICATION**

(21) Application number: 81303989.8

(22) Date of filing: 01.09.81

(51) Int. Cl.³: **C 08 J 3/28,** C 08 L 23/04,
C 08 K 3/04
// F16L9/12

(30) Priority: 04.09.80 CA 359523

(43) Date of publication of application: **17.03.82**
**Bulletin 82/11**

(84) Designated Contracting States: **AT BE CH DE FR GB IT
LI LU NL SE**

(71) Applicant: **Du Pont Canada Inc., P.O. Box 660, Montreal
Quebec, H3C 2V1 (CA)**

(72) Inventor: **Kelly, Peter Y., 4263 Bath Road, Kingston
Ontario, K7M 4Y9 (CA)**
Inventor: **White, George, 10 Wagner Street, Glenburnie
Ontario, K0H 1S0 (CA)**

(74) Representative: **Ellis, John Clifford Holgate et al,
MEWBURN ELLIS & CO. 2/3 Cursitor Street, London
EC4A 1BQ (GB)**

(54) **Pipe manufactured from irradiated polyethylene containing carbon black.**

㊼ A process for the manufacture of pipe, and the pipe so obtained, are disclosed. A blend of a polyethylene having a density in the range of 0.935–0.948 g/cm³ and 1–3%, by weight, of carbon black and which has been irradiated in an inert atmosphere while in the form of granules, is fed to an extruder, extruded in the form of pipe and cooled. The irradiation may be electron or gamma irradiation and is in an amount of less than 1.5 Mrad. The preferred inert atmosphere is steam. The pipe has improved properties and may be used in a wide variety of uses e.g. construction of sewer lines and for transmission of liquids and gases and the like.

## PIPE MANUFACTURED FROM IRRADIATED
## POLYETHYLENE CONTAINING CARBON BLACK

The present invention relates to pipe manufactured from polyethylene containing carbon black and especially to such polyethylene that has been irradiated with electron or gamma irradiation.

Polyethylene is used in a wide variety of end-uses, one of which is in the manufacture of pipe. Such pipe may have a small diameter e.g. 1-3 cm, or a large diameter e.g. up to 150 cm. In order to increase the service life of such pipe, carbon black is frequently admixed with the polyethylene used in the manufacture of the pipe, especially in amounts of 1-3% by weight. Polyethylene pipe has been used in the construction of sewer lines and for the transmission of liquids and gases, mine tailings and the like.

Irradiation of polyethylene is known in the art but such irradiation has primarily been conducted on fabricated articles e.g. on film to be used as a packaging material, fibre, sheet or moulded articles, and/or at relatively high dosage levels e.g. at least 2 Mrads of irradiation. Examples of such known irradiation processes are the processes disclosed in U. S. Patents 2 855 517 of W. C. Rainer et al, issued 1958 October 7; 2 863 812 of B. Graham, issued 1958 December 9; 2 906 678 of E. J. Lawton et al, issued 1959 September 29; 2 919 473 of Q. P. Cole, issued 1960 January 5; and 3 783 115 of G. Zeppenfeld, issued 1974 January 1; and Canadian Patents 579 522 of L. G. Brazier et al, issued 1959 July 14; 638 387 of E. J. Lawton et al, issued 1962 March 20; and 638 448 of E. J. Lawton, issued 1962 March 20.

The irradiation of poly-$\alpha$-olefins having a density of at least 0.94, and optionally containing carbon black, in air with about $10^5$ to $10^{11}$ roentgens of irradiation, which corresponds to an absorption of about 0.1 to $10^5$ Mrads of irradiation, is disclosed in Canadian Patent 605 124 of K. R. Mills, issued 1960 September 13. A process for the production of an intimate dispersion of carbon black and poly-$\alpha$-olefin by subjecting the polymer to ionizing irradiation and subsequently admixing carbon black therewith is disclosed by B. G. Harper et al in U. S. 3 130 139, issued 1964 April 21.

It has now been found that properties of polyethylene pipe manufactured from polyethylene containing carbon black may be improved by irradiation of the polyethylene containing carbon black with electron or gamma irradiation in an inert atmosphere.

Accordingly the present invention provides pipe manufactured from polyethylene of density in the range 0.935 to 0.948 $g/cm^3$ having 1-3% by weight of carbon black blended therewith, said blend of polyethylene and carbon black having been irradiated while in the form of granules with irradiation selected from the group consisting of electron and gamma irradiation, said irradiation having been carried out in an inert atmosphere and being in an amount of less than 1.5 Mrad.

The present invention also provides a process for the manufacture of pipe comprising feeding to an extruder a polyethylene of density in the range of 0.935 to 0.948 $g/cm^3$ having 1-3% by weight of carbon black blended therewith, the blend of polyethylene and carbon black being in the form of granules that have been irradiated with irradiation selected from the group consisting of electron and gamma irradiation, said irradiation having been carried out in an inert atmosphere and being in an amount of less than 1.5 Mrad, extruding said polyethylene in the form of pipe and cooling the pipe so formed.

In a preferred embodiment the granules have been irradiated in an atmosphere of steam.

Processes for the manufacture of pipe from polyethylene are known. In general polyethylene in the form of granules is fed to an extruder, melted and then continuously extruded through an annular die of the dimensions required to form pipe of the desired diameter and thickness. After cooling, the pipe is cut into the desired lengths. The control of the extrusion of pipe is important in the manufacture of pipe, especially large diameter pipe.

The polyethylene of the present invention is polyethylene that has been irradiated while in the form of granules and not in the form of sheet, film or other fabricated shapes. In particular the granules may be pellets, powder or the like e.g. the shapes of polyethylene that are normally fed to processing equipment e.g. extruders, used in the fabrication of articles from polyethylene.

The polyethylene of the present invention may be a homopolymer of ethylene or a copolymer of ethylene and a higher α-olefin having 4-10 carbon atoms. Such homopolymers and copolymers may be blended together or admixed prior to, or even after, irradiation. It is preferred that the higher α-olefin have 4-8 carbon atoms and be a linear α-olefin. Examples of such α-olefins are butene-1, hexene-1, and octene-1. Homopolymers of ethylene and copolymers of ethylene and a higher α-olefin are commercially available and may be manufactured by a variety of polymerization techniques. The polyethylene of the present invention is of a density in the range of about 0.935-0.948 and especially in the range 0.940-0.944. The actual density of the polyethylene that is used will depend on the intended end-use of the pipe, the physical dimensions of the pipe and other physical characteristics of the polyethylene.

The polyethylene used in the present invention is in the form of a blend with 1-3%, by weight, of carbon black, especially 1.5-2.5%, by weight, of carbon black.

The molecular weight of a polymer is an important factor in determining the properties of a polymer. Melt index is a measure of the melt viscosity of the polymer and is related to the molecular weight of the polymer. Melt viscosity is an important factor in the extrusion of a polymer into a desired shape e.g. pipe and especially large diameter pipes. Such matters will be understood by those skilled in the art. For example melt index and melt viscosity are discussed in Canadian Patent 1-017 496 of I. C. B. Saunders and S. McPolin which issued 1977 September 13. That patent also describes a preferred polyethylene for use in the present invention viz a copolymer of ethylene and at least one α-olefin of 4-10 carbon atoms, especially butene-1, having a density in the range 0.938-0.944, a melt index (as measured by the procedure of ASTM D-1238 (Condition E)) of less than about 0.40, a melt viscosity at 190°C of less than about 2.0 x 10$^4$ poise at an apparent shear rate of 100 sec$^{-1}$ and greater than about 3 x 10$^5$ poise at an apparent shear rate of 0.1 sec$^{-1}$.

In preferred embodiments the polyethylene used in the present invention has a melt index of less than 2.0 and especially less than 0.4. The melt index of the polyethylene will depend in particular on the intended end-use of the pipe.

The present invention is directed to pipe manufactured from polyethylene having 1-3% carbon black blended therewith. The blend of polyethylene and carbon black has been subjected, while in the form of granules, to irradiation in an amount of less than 1.5 Mrad. The irradiation, which may be electron or gamma irradiation, is carried out in an inert atmosphere, in particular an inert oxygen-free atmosphere. The atmosphere may be for example nitrogen or steam, the latter being preferred. In a preferred embodiment, the granules are irradiated at a temperature of at least 80°C but less than the temperature at which the granules tend to agglomerate. That temperature will depend on the characteristics of the polymer being irradiated e.g. on the composition, method of manufacture, density and the like.

In a preferred embodiment the granules of polyethylene have been subjected to irradiation in an amount in the range of 0.05-0.75 Mrad of irradiation and particularly 0.3-0.7 Mrad of irradiation. The amount of irradiation will depend in particular on the intended end-use of the pipe and especially on the degree of change in properties of the pipe that is desired. Higher levels of irradiation may result in undesirable side effects, especially the formation of gel in the polymer and hence defects in the pipe manufactured therefrom. As used herein gel refers to that matter which remains after Soxhlet extraction of polyethylene using xylene as solvent and a 200 TYLER® mesh wire screen in the extraction apparatus. Irradiation normally does not cause formation of significant amounts of gel until the amount of irradiation exceeds a predetermined level, dependent on the particular polyethylene being irradiated, after which gel forms rapidly on further irradiation. Gel formation, on irradiation, in amounts of more than 0.1% by weight, is outside the scope of this invention in the unlikely event that it should occur.

Sources of electron and gamma irradiation are known and any convenient source may be used. The intensity of the irradiation may be varied over a wide range. The intensity selected will depend primarily on availability of a suitable source of irradiation and the time required to provide the required amount of irradiation.

In a preferred embodiment the granules of polyethylene have been subjected to an atmosphere of steam for a period of time prior to and after irradiation. The temperature of the steam should be less than the temperature at which agglomeration of the granules tends to occur. The temperature of agglomeration will depend on the particular polyethylene, for example, the polymerization process used in its manufacture, density, melt index and comonomer content, as will be understood by those skilled in the art. In addition the temperature of the steam should be at least 80°C, and preferably at least 100°C, in order to expedite the treatment of the granules, especially to facilitate reduction of the oxygen content of the granules.

The period of time of the steam treatment of the granules before irradiation depends in particular on the temperature of the steam. When the temperature of the steam is near that of agglomeration of the granules the treatment time should be at least 20 minutes. Similarly when the temperature is 80°C the treatment time should be at least 90 minutes. At intermediate temperatures the minimum treatment time is intermediate between 20 and 90 minutes. Longer treatment times may be used.

The granules of polyethylene may be treated with steam by any convenient method. Batch or continuous treatment processes may be used although the latter are preferred. For example the granules may be placed in a vessel or container and contacted with steam, especially by passing the steam counter-current to the flow of granules in a vessel, or by passing the granules through an atmosphere of steam, for example, using a conveying system.

In another preferred embodiment the irradiated granules have been subjected to treatment with steam at a temperature of at least 80°C but less than the temperature at which the irradiated granules tend to agglomerate in order to substantially reduce the level of any free radicals in the polyethylene. Preferably the temperature is at least 100°C. The period of time selected for this steam treatment will usually depend on the type of irradiation as electron irradiation tends to be more intense than gamma irradiation, and hence a given degree of irradiation may be obtained in a shorter period of time using electron irradiation. When the irradiation is electron irradiation the irradiated granules should be subjected to steam for at least 75 minutes when the steam temperature is 80°C and at least 30 minutes when the temperature is near that of agglomeration of the granules. At intermediate temperatures the minimum treatment time is intermediate between 30 and 75 minutes, on a pro rata basis. When the irradiation is gamma irradiation the corresponding minimum periods of time are 20 minutes and 10 minutes. Longer treatment times may be used.

The polyethylene used in the present invention may contain antioxidants and other stabilizers. However some stabilizers may be affected by irradiation and increased levels of such stabilizers may be necessary in the polymer in order that the irradiated polymer will contain the desired level of effective stabilizer.

The pipe of irradiated polyethylene of the present invention may be used in the same type of end-uses as similar pipe manufactured from non-irradiated polyethylene e.g. in sewers and for the transmission of liquids and gases. The pipe of the present invention may exhibit improved properties with respect to such end-uses, especially improved environmental stress crack resistance, thereby providing improved pipe for such end-uses and/or pipe for new
end-uses.

The irradiation of polyethylene is disclosed in
the copending patent application of G. White filed on the
same day as the present application.

The present invention is further illustrated by
the following examples:

### Example I

Pellets of SCLAIR® 35B polyethylene resin, an
ethylene/butene-1 copolymer having a density of 0.941
g/cm$^3$ and a melt index of 0.35 dg/min and blended with 2%
carbon black, were subjected to steam at 100°C for 45
minutes, irradiated in steam using gamma irradiation and
subjected to steam at 100°C for a further 10 minutes.

Environmental stress crack resistance was measured, at a stress of 38.7 kg/cm$^2$, on compressed plaques
using the following procedure:

Plaques 70 ml thick and 0.25 in. in width were
compression moulded and then cooled to room temperature over
a period of several hours. The plaques were notched from
both sides so that a bridge 1 mm in width remained. One end
of the plaque was anchored in a constant temperature bath of
distilled water. The other end was attached to a cantilever
by means of which the indicated stress was applied. The
time to failure of the plaque was measured.

All results were obtained in triplicate. The temperature used was 80°C.

The results obtained were as follows:

| Irradiation (Mrad) | Environmental Stress Crack Resistance (hours) |
|---|---|
| 0 | 135 |
| 0.1 | 160 |
| 0.2 | 175 |
| 0.4 | >650 |

The results show that stress crack resistance
increased with increasing amounts of irradiation.

Rheological properties of the irradiated pellets were measured and were as follows:

| Irradiation (Mrad) | Melt Index | Stress* Exponent | Viscosity (poises) at 0.001 sec⁻¹ | at 100 sec⁻¹ | at 1000 sec⁻¹ |
|---|---|---|---|---|---|
| 0 | 0.26 | 1.79 | $1.8 \times 10^6$ | $21 \times 10^3$ | $3.9 \times 10^3$ |
| 0.1 | 0.16 | 1.88 | $3.4 \times 10^6$ | $22 \times 10^3$ | $4.1 \times 10^3$ |
| 0.2 | 0.11 | 2.02 | $8.2 \times 10^6$ | $24 \times 10^3$ | $4.5 \times 10^3$ |
| 0.4 | NM** | NM | $63 \times 10^6$ | $31 \times 10^3$ | $5.7 \times 10^3$ |

** Not measured, viscous.

\* A measure of molecular weight distribution, measured as described in the aforementioned Canadian Patent 1 017 496.

## Example II

As a comparison the procedure of Example I was repeated on the ethylene/butene-1 copolymer except that the copolymer was blended with the carbon black after irradiation of the copolymer.

The results obtained were as follows:

| Irradiation (Mrad) | Environmental Stress Crack Resistance (hours) |
|---|---|
| 0 | 220 |
| 0.1 | 145 |
| 0.2 | 110 |
| 0.4 | 36 |

The results obtained show that the environmental stress crack resistance decreased with increasing amounts of irradiation, in contrast to the results of Example I.

## Example III

Pellets of SCLAIR® 35B polyethylene were irradiated using the procedure of Example I. Environmental stress crack resistance was measured on compression moulded plaques using the procedure of ASTM D-1693, a procedure similar to that described in Example II of the aforementioned Canadian Patent 605 124 and referred to below as "Bell ESCR". Environmental stress crack resistance was also measured using the procedure of Example I of this application but using a stress of 45.7 kg/cm$^2$, which is referred to below as "Constant Load ESCR".

As a comparison pellets of SCLAIR® 35B polyethylene were irradiated with gamma irradiation in air at 23°C in the absence of any pre-irradiation or post-irradiation treatment with steam.

The results obtained were as follows:

| Atmosphere | Irradiation (Mrad) | Bell ESCR (hours) | Constant Load ESCR (hours) |
|---|---|---|---|
| - | 0 | >400 | 58 |
| steam | 0.25 | >400 | 96 |
| steam | 0.35 | >400 | 190 |
| steam | 0.40 | >400 | >400 |
| - | 0 | >400 | 58 |
| | 0.7 | 210 | 82 |
| air | 0.9 | 20 | 72 |
| air | 1.25 | NM* | 99 |
| air | 1.50 | NM | 138 |
| air | 3.00 | NM | 86 |

\* Not measured.

It is believed that an irradiation dose of 0.4 Mrad in steam is approximately equivalent to an irradiation dose of 1.0 Mrad in air with regard to the effect on the viscosity of the polymer at low, for example 0.001 sec$^{-1}$, shear rates.

The results show that the atmosphere in which the irradiation is carried out has a major effect on the environmental stress crack resistance of the irradiated polymer.

### Example IV

The procedure of Example III was repeated using an ethylene/butene-1 copolymer having a density of 0.946 and a melt index of 0.21 that had been blended with 2% carbon black. The "Constant Load ESCR", as described in Example III was measured on the irradiated polymer.

The results were as follows:

|  | Atmosphere | Irradiation (Mrad) | Constant Load ESCR (hours) |
|---|---|---|---|
|  | - | 0 | 38 |
|  | steam | 0.25 | 68 |
|  | steam | 0.35 | 85 |
|  | steam | 0.40 | 100 |
|  | steam | 0.50 | 160 |

The results show that Constant Load ESCR increased with increasing amounts of irradiation.

<div align="center">Example V</div>

Pellets of each of SCLAIR 35B polyethylene and the copolymer of Example IV were treated with steam for 45 minutes, irradiated in steam with gamma rays to an irradiation dose level of 0.5 Mrad and then treated with steam for a further 10 minutes. The temperature of the steam in each instance was about 108°C. The irradiated pellets were dried for at least 12 hours at 60°C in a hot air recirculating oven.

The irradiated pellets were extruded, at a melt temperature of 232°C, into pipe using a melt extrusion/vacuum forming pipe extrusion process. The pipe has a nominal outside diameter of 6.35 cm and a nominal wall thickness of 0.64 cm.

The pipe so obtained was pressure tested at a hoop stress of 119 kg/cm$^2$ using the hydrostatic test described in ASTM 2837. The samples of pipe used were 60 cm in length. The temperature of the testing medium, water, was 23°C.

As a comparison, pipe was manufactured from pellets of SCLAIR 35B polyethylene and the copolymer of Example IV and subjected to the hydrostatic test.

The results were as follows:

| Polymer* | Irradiation | Time to Failure (hours) |
|---|---|---|
| A | no | 54 |
| A | yes | 968 |
| B | no | 348 |
| B | yes | >2900 |

* A = SCLAIR 35B polyethylene
· B = the copolymer of Example IV.

- 11 -

All failures of the pipe in the tests were ductile failures.

The results show the improvement obtained by manufacturing pipe from irradiated polymer.

CLAIMS :

1. Pipe manufactured from polyethylene of density in the range 0.935 to 0.948 $g/cm^3$ having 1-3% by weight of carbon black blended therewith, said blend of polyethylene and carbon black having been irradiated while in the form of granules with irradiation selected from the group consisting of electron and gamma irradiation, said irradiation having been carried out in an inert atmosphere and being in an amount of less than 1.5 Mrad.

2. A process for the manufacture of pipe comprising feeding to an extruder a polyethylene of density in the range of 0.935 to 0.948 $g/cm^3$ having 1-3% by weight of carbon black blended therewith, the blend of polyethylene and carbon black being in the form of granules that have been irradiated with irradiation selected from the group consisting of electron and gamma irradiation, said irradiation having been carried out in an inert atmosphere and in an amount of less than 1.5 Mrad, extruding said polyethylene in the form of pipe and cooling the pipe so formed.

3. The pipe of Claim 1 or the process of Claim 2 in which said inert atmosphere was steam.

4. The pipe of Claim 1 or Claim 3 or the process of Claim 2 or Claim 3 in which temperature of irradiation was in the range between $80^{\circ}C$ and the temperature of agglomeration of the granules of polyethylene.

5. The pipe of Claim 1 or Claim 3 or Claim 4 or the process of any one of Claims 2 to 4 in which the granules were subjected to steam before and after irradiation.

6. The pipe of Claim 1 or any one of Claims 3 to 5 or the process of any one of Claims 2 to 5 in which the amount of irradiation was in the range 0.05-0.75 Mrad.

7. The pipe of Claim 1 or any one of Claims 3 to 5 or the process of any one of Claims 2 to 5 in which the amount of irradiation was in the range 0.3-0.7 Mrad.

8. The pipe of Claim 1 or any one of Claims 3 to 7 or the process of any one of Claims 2 to 7 in which the polyethylene, before irradiation, had a melt index of less than 2.0.

9. The pipe of Claim 1 or any one of Claims 3 to 7 or the process of any one of Claims 2 to 7 in which the polyethylene, before irradiation, had a melt index of less than 0.4.

10. The pipe of Claim 1 or any one of Claims 3 to 9 or the process of any one of Claims 2 to 9 in which the polyethylene, before irradiation, had a density in the range 0.940-0.944.

11. The pipe of Claim 1 or any one of Claims 3 to 10 or the process of any one of Claims 2 to 10 in which the polyethylene is a copolymer of ethylene and a higher $\alpha$-olefin having 4-10 carbon atoms.

12. The process of any one of Claims 2 to 11 in which (a) prior to irradiation the granules of polyethylene were subjected to an atmosphere of steam at a temperature of at least $80^{\circ}C$ but less than the temperature of agglomeration of the granules for a minimum period of time inversely related to said temperature, said minimum period of time being in the range from 90 minutes when the temperature is $80^{\circ}C$ to 20 minutes when the temperature is near that of agglomeration, and (b) after irradiation subjecting the irradiated granules of polyethylene to an atmosphere of steam at a temperature of at least $80^{\circ}C$ but less than the temperature of agglomeration of the granules of irradiated polyethylene for a minimum period of time inversely related to said temperature, such that

(a) when the irradiation is electron irradiation, the minimum period is in the range from 75 minutes when the temperature is $80^{\circ}C$ to 30 minutes when the temperature is near that of agglomeration of the irradiated polymer, and

(b) when the irradiation is gamma irradiation, the minimum period is in the range from 20 minutes when the temperature is $80^{\circ}C$ to 10 minutes when the temperature is near that of agglomeration of the irradiated polymer.